# EUROPEAN PATENT APPLICATION

(11) **EP 4 129 898 A1**
(43) Date of publication of application: **08.02.2023**
(21) Application number: 21776413.3
(22) Date of filing: 10.03.2021
(51) Int. Cl.: C01B 21/064

(54) **METHOD FOR PRODUCING HEXAGONAL BORON NITRIDE POWDER**

(30) Priority: 27.03.2020 JP 2020057912
(71) Applicant: Tokuyama Corporation, Shunan-shi, Yamaguchi 745-8648 (JP)
(72) Inventor: IKEDA, Yuichi, Shunan-shi, Yamaguchi 745-8648 (JP); DAIKI, Shota, Shunan-shi, Yamaguchi 745-8648 (JP); FUJINAMI, Kyoichi, Shunan-shi, Yamaguchi 745-8648 (JP); NAWATA, Teruhiko, Shunan-shi, Yamaguchi 745-8648 (JP)
(74) Representative: Bittner, Thomas L.
(86) International application number: PCT/JP2021/009425
(87) International publication number: WO 2021/193046

(57) **Abstract**

Provided is a method for producing, with a small amount of lithium, a hexagonal boron nitride powder containing thick hexagonal boron nitride particles. A method for producing a hexagonal boron nitride powder, including the steps of: preparing a mixed powder which contains an organic compound containing nitrogen atoms, a boron source which contains boron atoms whose molar ratio with respect to the nitrogen atoms is adjusted to be 0.26 or more and 0.67 or less, and an alkali metal in which lithium atoms are adjusted to be in a range of 30 mol% or more and less than 100 mol%, the alkali metal being present such that a molar ratio of the boron atoms with respect to alkali metal atoms contained in the alkali metal is 0.75 or more and 3.35 or less; and heating the mixed powder at a maximum temperature of 1200°C or higher and 1500°C or lower. (Fig. 3)

## Description

The present invention relates to a novel method for producing a hexagonal boron nitride powder.

### Background

Hexagonal boron nitride has high thermal conductivity. Accordingly, a hexagonal boron nitride powder is used as a heat dissipation filler, and a resin composition which is obtained by filling a resin with the hexagonal boron nitride powder is used for heat dissipation applications of electronic components. Known examples of a method for producing hexagonal boron nitride include: a flux method according to which boron nitride is dissolved in an organic compound which serves as a fusing agent and then deposition of the boron nitride is carried out; and a melamine method according to which boron is nitrided by using a nitrogen-containing organic compound as a nitrogen source.

In each of hexagonal boron nitride particles, thermal conductivity is significantly smaller in a c-axis direction of a crystal than in a-axis and b-axis directions of the crystal. Further, the hexagonal boron nitride particles are typically plate-like crystals. For this reason, in the resin composition which is filled with the hexagonal boron nitride powder that is made of the hexagonal boron nitride particles, the hexagonal boron nitride particles are aligned in the step of forming the resin composition. This causes a problem of thermal conductivity anisotropy, that is, a problem that the thermal conductivity largely varies depending on orientation of the resin composition.

This thermal conductivity anisotropy can be improved by bringing an aspect ratio closer to 1, the aspect ratio being expressed by a ratio of a major axis to a thickness (major axis/thickness) of the hexagonal boron nitride particles. As a method for obtaining thick hexagonal boron nitride particles which have an aspect ratio close to 1, JP 2016-141600 proposes a flux method in which after a boron nitride powder and lithium carbonate are mixed together such that an amount of the lithium carbonate is 50 mol%, a resultant mixture is heated. In this production method, it is possible to obtain thick hexagonal boron nitride particles which have grown in the c-axis direction, by crystal growth whose driving force is decomposition and evaporation of the lithium carbonate.

### Summary

### Technical Problem

As described above, it has been well-known to obtain, by using lithium in the flux method, a hexagonal boron nitride powder which contains thick hexagonal boron nitride particles. In contrast to such a method, the inventors of the present invention have proposed a melamine method which uses a mixed powder that contains a boron source, a nitrogen source and lithium as raw materials, as a method for directly producing a thick hexagonal boron nitride powder without use of the hexagonal boron nitride powder as a raw material.

However, in the above method, use of a lithium compound has the following problems: high cost of the lithium compound; a concern about future supply of the lithium compound due to increasing demand for the lithium compound in battery applications etc.; and the like. Accordingly, in view of industrially producing the hexagonal boron nitride powder which contains thick hexagonal boron nitride particles, there is demand for establishment of a method for producing the hexagonal boron nitride powder with use of a reduced amount of lithium. In light of the above, an object of an aspect of the present invention is to provide a method for producing, with use of a small amount of lithium, a hexagonal boron nitride powder which contains thick hexagonal boron nitride particles.

### Solution to Problem

In order to solve the above problem, the inventors of the present invention have carried out diligent studies. As a result, the inventors have confirmed the following: when the amount of lithium used is reduced, the aspect ratio tends to be higher and thick hexagonal boron nitride particles cannot be obtained; and even when an alkali metal which is a congener of lithium, it is not possible to obtain thick hexagonal boron nitride particles. As a result of further studies, surprisingly, the inventors have obtained the following finding: in the above melamine method, even in a case where the amount of lithium is reduced by replacing, with an alkali metal other than lithium, part of lithium in the mixed powder which contains the boron source and the nitrogen source and lithium as the raw materials, it is possible to produce hexagonal boron nitride particles which have a low aspect ratio equivalent to that in a case where a considerable amount of lithium is used. The inventors have thus accomplished the present invention.

In other words, an aspect of the present invention is a method for producing a hexagonal boron nitride powder, the method including the steps of: preparing a mixed powder which contains an organic compound that contains nitrogen atoms, a boron source which contains boron atoms whose molar ratio with respect to the nitrogen atoms is adjusted to be 0.26 or more and 0.67 or less, and an alkali metal in which lithium atoms are adjusted to be in a range of 30 mol% or more and less than 100 mol%, the alkali metal being present such that a molar ratio of the boron atoms with respect to alkali metal atoms contained in the alkali metal is 0.75 or more and 3.35 or less; and heating the mixed powder at a maximum temperature of 1200°C or higher and 1500°C or lower.

### Advantageous Effects of Invention

The present invention makes it possible to produce, with use of a reduced amount of lithium as compared to a conventional amount of lithium used, a hexagonal boron nitride powder which contains thick hexagonal boron nitride particles that can make the thermal conductivity anisotropy of a resin composition low. This is industrially advantageous because it is possible to provide a production process of the hexagonal boron nitride powder which contains thick hexagonal boron nitride particles that are inexpensive and that cause less concern about raw material supply.

### Brief Description of Drawings

- Fig. 1: shows scanning electron microscopic images of a hexagonal boron nitride powder that was produced in Example 1, the scanning electron microscopic images having been captured at magnification of (a) 2000 times, (b) 5000 times, and (c) 10000 times.
- Fig. 2: shows scanning electron microscopic images of a hexagonal boron nitride powder that was produced in Example 2, the scanning electron microscopic images having been captured at magnification of (a) 2000 times, (b) 5000 times, and (c) 10000 times.
- Fig. 3: shows scanning electron microscopic images of a hexagonal boron nitride powder that was produced in Example 3, the scanning electron microscopic images having been captured at magnification of (a) 2000 times, (b) 5000 times, and (c) 10000 times.
- Fig. 4: shows scanning electron microscopic images of a hexagonal boron nitride powder that was produced in Reference Example 1, the scanning electron microscopic images having been captured at magnification of (a) 2000 times, (b) 5000 times, and (c) 10000 times.
- Fig. 5: shows scanning electron microscopic images of a hexagonal boron nitride powder that was produced in Reference Example 6, the scanning electron microscopic images having been captured at magnification of (a) 2000 times, (b) 5000 times, and (c) 10000 times.
- Fig. 6: shows scanning electron microscopic images of a hexagonal boron nitride powder that was produced in Reference Example 7, the scanning electron microscopic images having been captured at magnification of (a) 2000 times, (b) 5000 times, and (c) 10000 times.

### Description of Embodiments

The following description will discuss an embodiment of the present invention. The present invention is, however, not limited to the embodiment below.

### (Step of preparing mixed powder)

A mixed powder in accordance with an embodiment of the present invention is a mixed powder which contains: an organic compound that contains nitrogen atoms; a boron source which contains boron atoms whose molar ratio with respect to the nitrogen atoms are adjusted to be 0.26 or more and 0.67 or less; and an alkali metal in which lithium atoms are adjusted to be in a range of 30 mol% or more and less than 100 mol%, the alkali metal being present such that a molar ratio of the boron atoms with respect to atoms of the alkali metal is 0.75 or more and 3.35 or less.

Examples of the boron source which is contained in the mixed powder in accordance with an embodiment of the present invention include diboron trioxide (boron oxide), diboron dioxide, tetraboron trioxide, tetraboron pentoxide, borax, and anhydrous borax. From among these boron sources, it is preferable to use diboron trioxide. This is because since diboron trioxide is an inexpensive raw material, use of diboron trioxide is industrially beneficial. Moreover, use of borax or anhydrous borax is preferable. This is because (i) borax and anhydrous borax are relatively inexpensive raw materials and (ii) with use of borax or anhydrous borax, reaction proceeds substantially uniformly, and thus, produced hexagonal boron nitride particles tend to have reduced variation in particle diameter and/or the like. Note that two or more kinds of boron sources may be used in combination as the boron source.

Examples of the organic compound which contains nitrogen that is contained in the mixed powder in accordance with an embodiment of the present invention include melamine, ammeline, ammelide, melam, melon, dicyandiamide, guanidine, guanidine carbonate, and urea. From among these organic compounds, it is preferable to use melamine and urea, and it is particularly preferable to use melamine. Use of melamine as the organic compound which contains nitrogen is industrially beneficial since melamine is an inexpensive raw material. Note that two or more kinds of organic compounds may be used in combination as the organic compound which contains nitrogen.

In the mixed powder in accordance with an embodiment of the present invention, an alkali metal is present and the alkali metal contains both of 30 or more mol% and less than 100 mol% of lithium and an alkali metal other than lithium. The alkali metal is generally added in the form of an alkali metal salt to the mixed powder. The alkali metal salt becomes a flux when melted. The flux acts as an auxiliary agent for growing the hexagonal boron nitride particles.

As described above, reduction in amount of the lithium contained in the mixed powder tends to be result in an increased aspect ratio of the hexagonal boron nitride particles as described above. However, by causing the alkali metal other than lithium to be present, it is possible to suppress an increase in aspect ratio even in a case where the amount of the lithium is reduced. It should be noted that in a case where only an alkali metal other than lithium is used as the flux without containing lithium in the flux, or in a case where only a small amount of lithium is used in the flux, it is impossible to obtain thick hexagonal boron nitride particles.

The alkali metal salt is not particularly limited, as long as the alkali metal salt, when heated, melts and acts as the flux. Examples of a lithium salt include lithium carbonate, lithium hydroxide, lithium chloride, lithium iodide, lithium fluoride, lithium nitrate, lithium sulfate, lithium borate, and lithium molybdate. In a case where lithium carbonate is used from among these lithium salts, thick hexagonal boron nitride particles as described above tend to be easily obtained. Accordingly, use of lithium carbonate is preferable. Note that two or more kinds of lithium salts may be used in combination as the lithium salt.

In a case where a ratio of lithium in the alkali metal is small, it is difficult to obtain thick hexagonal boron nitride particles. Accordingly, the ratio of lithium in the alkali metal is preferably 45 mol% or more, and more preferably 55 mol% or more. On the other hand, in a case where the ratio of lithium is large, the effect of reducing the amount of lithium used is limited although there is no particular problem in physical properties of a resultant hexagonal boron nitride powder. Therefore, the ratio of lithium in the alkali metal is preferably 90 mol% or less, and more preferably 70 mol% or less.

The alkali metal other than lithium is preferably sodium or potassium because sodium and potassium are inexpensive and easy to obtain. Further, the alkali metal is more preferably sodium. This is because in a case where sodium is used, excessive volatilization of the flux, which may cause deterioration of a heating furnace body, can be easy prevented. It should be noted that two or more kinds of alkali metals other than lithium may be used in combination as the lithium salt.

Examples of a salt of the alkali metal other than lithium include carbonates, nitrates, borates, hydroxides, fluorides, chlorides, bromides, and iodides. Note that in a case where a borate, which is an alkali metal, is added, the borate can serve as both of the boron source and the salt of the alkali metal other than lithium.

In the mixed powder in accordance with an embodiment of the present invention, a molar ratio of boron atoms to nitrogen atoms (B/N) is 0.26 or more and 0.67 or less, and is preferably 0.32 or more and 0.45 or less. When the B/N is 0.26 or more, a high yield can be secured. In a case where the B/N is 0.67 or less, it is possible to secure a nitrogen source sufficient for nitridation. Note that the nitrogen atoms in the mixed powder that is heated in the step of heating originate from the organic compound which contains nitrogen, and the boron atoms in the mixed powder that are heated in the step of heating originate from the boron source.

In the mixed powder in accordance with an embodiment of the present invention, a molar ratio of the boron atoms to the atoms of the alkali metal (B/AM) is 0.75 or more and 3.35 or less, and is preferably 0.82 or more and 2.70 or less. In a case where the B/AM is 0.75 or more, it is possible to obtain hexagonal boron nitride sufficiently thick for improving the thermal conductivity anisotropy. When the B/AM is 3.35 or less, it is possible to form a sufficiently large amount of the flux, so that thick hexagonal boron nitride particles can be uniformly obtained.

Note that the mixed powder may contain another matter(s) other than the boron source, the organic compound which contains nitrogen, and the alkali metal, as long as such a matter(s) is contained in a range that does not hamper the effect of an embodiment of the present invention.

The mixed powder may be prepared by mixing, by a well-known method, the boron source, the organic compound which contains nitrogen, the alkali metal, etc. In a case where the mixing is carried out prior to the step of heating, the reaction proceeds substantially uniformly. This reduces variation in particle diameter and/or the like of hexagonal boron nitride particles in a prepared hexagonal boron nitride powder.

### (Step of heating)

In the step of heating in accordance with an embodiment of the present invention, the mixed powder is heated at a maximum temperature of 1200°C or higher and 1500°C or lower. Heating of the mixed powder at a temperature of 1200°C or higher makes it possible to suppress an increase in the aspect ratio of resultant hexagonal boron nitride particles. The maximum temperature is more preferably 1250°C or higher. Further, heating of the mixed powder at a temperature of 1500°C or lower makes it possible to suppress excessive volatilization of the alkali metal and also to suppress an increase in the aspect ratio of the hexagonal boron nitride particles. The maximum temperature is more preferably 1450°C or less.

Further, the particle diameter of the resultant hexagonal boron nitride powder can be controlled by controlling the maximum temperature. Therefore, it is possible to obtain a hexagonal boron nitride powder having a small particle diameter of approximately 0.1 µm to 0.4 µm, for example, by setting the maximum temperature to 1350°C or less. Alternatively, it is possible to obtain a hexagonal boron nitride powder having a particle diameter of approximately 0.5 µm to 2.0 µm, for example, by setting the maximum temperature to approximately 1400°C to 1500°C.

It is preferable that in the step of heating, the mixed powder be heated in an environment in an inert gas atmosphere at normal pressure or under reduced pressure. Heating in such an environment makes it possible to suppress damage to the heating furnace body. Note that, in the present specification, the inert gas atmosphere is a condition in which an inert gas is caused to flow into a container for heating the mixed powder and gas inside the container is replaced with the inert gas. There is no particular limitation on an amount of the inert gas that flows in, and the amount of the inert gas that flows in may be 5 L/min or more. Further, the inert gas may be, for example, nitrogen gas, carbon dioxide gas or argon gas.

In an example of a preferred method in the step of heating, the mixed powder is placed inside a reaction container in which no gas exchange occurs during the step of heating, and heating is carried out. In the step of heating, the boron source which is contained in the mixed powder is used in a production reaction of hexagonal boron nitride, but since part of the boron source is volatilized by heating, the part of the boron source is not used in the production reaction of hexagonal boron nitride. It should be noted here that it is possible to suppress volatilization of the boron source from the mixed powder by placing the mixed powder inside the reaction container in which no gas exchange occurs during the step of heating. This makes it possible to increase an amount of the boron source which is used in the production reaction of hexagonal boron nitride, and consequently to improve a yield of hexagonal boron nitride.

Note that "no gas exchange occurs" in the present specification means that the gas inside the reaction container and the gas outside the reaction container are not exchanged with each other. Note that, in the step of heating, gas is generated inside the reaction container due to progress of the production reaction of hexagonal boron nitride and volatilization or decomposition of the mixed powder. Therefore, it is only necessary not to intentionally take gas from the outside into the inside of the reaction container, and there is no need to completely prevent the gas inside the reaction container from being released to the outside of the reaction container.

There is no particular limitation on the structure, size, shape, material, and the like of the reaction container, and the structure, size, shape, material, and the like can be determined so as to achieve sufficient durability, heat resistance, pressure resistance, corrosion resistance, and the like in consideration of production conditions such as the heating temperature or the raw material(s).

As a mechanism for preventing gas exchange from occurring, for example, a reaction container with a lid may be used as the reaction container. The reaction container with a lid allows for separation of the inside of the reaction container from the outside by the lid. This suppresses inflow of gas from the outside of the reaction container, so that no gas exchange occurs.

Further, in a case where the reaction container is completely sealed, the pressure inside the reaction container is increased by, for example, the progress of the production reaction of hexagonal boron nitride, and the generation of gas due to volatilization or decomposition of the mixed powder, or expansion of gas in the reaction container due to heating. In this case, there is a risk of breakage of the reaction container, and/or in order to make the reaction container have a pressure-resistant structure, the material and shape of the reaction container may be limited. Therefore, it is preferable to release gas in excess from the inside of the reaction container as appropriate such that the gas is released in an amount within a range that does not greatly affect the yield of hexagonal boron nitride.

Examples of a method of releasing the gas in excess from the inside of the reaction container include a method according to which a pressure control valve is attached to a reaction container, or a method according to which a small hole is formed in a reaction container. Further, in a case where the reaction container is a container with a lid, the lid is arranged to be put on a top of the reaction container without any particular fixation. This allows the reaction container to be sealed due to the weight of the lid itself in a case where an internal pressure is low. In contrast, in a case where the internal pressure becomes high, the lid is lifted and the gas inside the reaction container is discharged to the outside. Accordingly, use of a container with a lid makes it possible to not only simply prevent gas exchange from occurring but also discharge gas in excess from the inside of the reaction container. Therefore, in a preferred embodiment, such a container with a lid is used. In this case, the weight of the lid per unit area is preferably within a range of 5 kg/m² to 20 kg/m². Note that the weight of the lid per unit area is a value which is obtained by dividing the weight of the lid by an area of a portion of the lid, the portion facing an internal space of the reaction container.

The shape of the reaction container is not particularly limited, and any shape such as a cylindrical shape or a rectangular shape can be used. The shape of the reaction container is preferably cylindrical from the viewpoint of preventing breakage of the reaction container due to repeated heating and cooling. Further, from the viewpoint of improving production efficiency by effectively utilizing a space in installation of the reaction container in a heating furnace, the reaction container is preferably rectangular.

The material of the reaction container is not particularly limited as long as the material can withstand 1200°C higher and 1500°C or lower, which is the heating temperature in the step of heating. Examples of the material of the reaction container include alumina, titania, zirconia, silica, magnesia and calcia, and various ceramic sintered bodies such as cordierite and mullite which contain silica and alumina as main components. Further, from the viewpoint of preventing contamination of hexagonal boron nitride which is a reaction product, in an example of a preferred aspect, boron nitride is used as a material of the reaction container, or the reaction container made of a material other than boron nitride has an inner surface (a surface that comes in contact with the mixed powder or the hexagonal boron nitride produced) which is coated with boron nitride.

There is no particular limitation on an amount of the mixed powder which is placed inside the reaction container. However, in a case where the amount of the mixed powder is too small, a gas phase part in the reaction container is large. Accordingly, volatilization of the boron source is not sufficiently suppressed. This limits the effect of improving the yield. On the other hand, in a case where the amount of the mixed powder is too large, the pressure in the reaction container tends to increase because the gas phase part is small. Therefore, it is preferable that a volume occupied by the mixed powder inside the reaction container be within a range of preferably 50% to 90% of the volume of the reaction container, and more preferably 60% to 80% of the volume of the reaction container. Note that, in the present specification, the volume that is occupied by the mixed powder is a volume of a portion which is occupied by the mixed powder that is placed in the reaction container, and which includes voids between particles of the mixed powder.

There is no particular limitation on a method of heating the mixed powder that has been placed inside the reaction container in which no gas exchange occurs. However, since the heating can be simply carried out by placing the reaction container in the heating furnace and heating the reaction container to a desired temperature, this method is used in a preferred embodiment.

Note that in a case where the step of heating is carried out by placing the mixed powder inside the reaction container in which no gas exchange occurs, gas outside the reaction container is not taken into the reaction container. Therefore, it is not necessary to produce the inert gas atmosphere in the heating furnace. It is thus possible to use a batch-type heating furnace such as a shuttle kiln or a continuous-type heating furnace such as a tunnel kiln. In a case where mass production is considered, because of high production efficiency, it is particularly preferable to use a continuous-type heating furnace, like a tunnel kiln, in which while the reaction container is being moved inside the heating furnace, the reaction container can be heated. In a case where a shuttle kiln or a tunnel kiln is used as the heating furnace, a heating source may be an electronic heater. However, it is simple to carry out heating with hot air which is obtained by burning a fuel such as butane gas, kerosene, or the like. Heating with such hot air is thus a more preferable embodiment.

### (Other Steps)

A method for producing the hexagonal boron nitride powder in accordance with an embodiment of the present invention may include another step(s) other than the steps of: preparing the mixed powder; and heating. Such a step(s) is referred to as "another step(s)" in the present specification. Examples of the another step(s) which is included in the method for producing the hexagonal boron nitride powder include the steps of cleaning with an acid, cleaning with water, drying, and classifying.

The step of cleaning with an acid is a step of removing, by cleaning the hexagonal boron nitride powder with use of an acid, a reaction by-product such as the boron source, the salt of the alkali metal, and/or a complex oxide which has/have adhered to the hexagonal boron nitride powder. In the step of cleaning with an acid, a dilute acid such as hydrochloric acid is preferably used. There is no particular limitation on a method of cleaning with an acid. The hexagonal boron nitride powder may be cleaned with an acid by showering, immersion or stirring.

The step of cleaning with water is a step in which the hexagonal boron nitride powder is washed with water in order to remove the acid which has adhered to the hexagonal boron nitride powder in the step of cleaning with an acid. There is no particular limitation on a method of cleaning with water. The hexagonal boron nitride powder may be washed with water by showering or immersion after filtered.

The step of drying is a step in which the hexagonal boron nitride powder prepared is dried. There is no particular limitation on a method of drying. The method can be high-temperature drying, vacuum drying, or the like.

The step of classifying is a step in which the hexagonal boron nitride particles are divided in accordance with the size, shape, and/or the like of the particles. A classifying operation may be sieving or may be wet classification or airflow classification.

### <Hexagonal boron nitride powder>

The hexagonal boron nitride powder obtained by the above production method in accordance with an embodiment of the present invention has an aspect ratio of 1.0 or more and 5.0 or less. The aspect ratio in this range means that the hexagonal boron nitride powder contains thick hexagonal boron nitride particles and that it is possible to decrease the thermal conductivity anisotropy. Note that "hexagonal boron nitride particle" in the present specification means a single particle of hexagonal boron nitride. As described above, the hexagonal boron nitride particle is typically a plate-like particle. In the present specification, the hexagonal boron nitride particle has, as the major axis, a diameter that is largest in a plate surface of the plate-like particle, and has, as the thickness, a length that is perpendicular to this plate surface. Further, the value obtained by dividing the major axis by the thickness is referred to as the aspect ratio. The aspect ratio of the hexagonal boron nitride powder is an average value of aspect ratios of respective particles, the aspect ratios having been obtained by (i) randomly selecting 100 different hexagonal boron nitride particles from a scanning electron microscopy image at a magnification ratio of 5000 times, and (ii) measuring the length of the major axis of and the thickness of each primary particle.

The particle diameter of the hexagonal boron nitride powder may be selected as appropriate depending on an application of the hexagonal boron nitride powder, and is preferably in the range of 0.1 µm to 2.0 µm, and more preferably in the range of 0.1 µm to 0.4 µm. In a case where the particle diameter is 0.1 µm or more, a heat conduction path in the resin composition can be sufficiently formed, and a resin composition which has a high thermal conductivity can be easily obtained. Further, in such a case, it is easy to fill the resin with the hexagonal boron nitride powder and handleability of the resin composition is improved. In a case where the particle diameter is 2.0 µm or less, the filling property of the hexagonal boron nitride powder in the resin is enhanced, so that it is easy to obtain a resin composition which has good handleability and high thermal conductivity. Further, in a case where the particle diameter is set to a particle diameter of as small as 0.4 µm or less, the hexagonal boron nitride powder can be easily used in a thin resin sheet. Therefore, the particle diameter of 0.4 µm or less is particularly preferable. In the case of the thin resin sheet, the hexagonal boron nitride particles tend to be aligned in the step of processing for making the resin sheet thin. It is therefore particularly advantageous to improve the thermal conductivity anisotropy by using the thick particles in accordance with an embodiment of the present invention. Note that the particle diameter of the hexagonal boron nitride powder in accordance with an embodiment of the present invention is an average value which is calculated by (i) randomly selecting 100 different hexagonal boron nitride particles from a scanning electron microscopy image at a magnification ratio of 5000 times, and (ii) measuring the length of the major axis of each particle.

The hexagonal boron nitride powder has a specific surface area of preferably 1.5 m²/g or more and 12.0 m²/g or less, more preferably 1.8 m²/g or more and 11.0 m²/g or less, and still more preferably 2.0 m²/g or more and 10.0 m²/g or less. The specific surface area of 1.5 m²/g or more of the hexagonal boron nitride powder indicates the presence of many hexagonal boron nitride particles each of which has a small particle diameter. As a result, it becomes easy to improve the filling property of the hexagonal boron nitride powder in the resin, and it also becomes easy to use the hexagonal boron nitride powder in a thin resin sheet. Note that the specific surface area of 12.0 m²/g or less of the hexagonal boron nitride powder indicates a small content of a fine powder in the hexagonal boron nitride powder and the presence of many thick hexagonal boron nitride particles. In a case where the content of the fine powder is small, an increase in viscosity of the resin composition is suppressed when the hexagonal boron nitride powder is kneaded into the resin. Therefore, the resin is easily filled with the hexagonal boron nitride powder, and the handleability of the resin composition is improved. Note that the specific surface area of the hexagonal boron nitride powder can be measured with a BET-specific surface area meter.

### <Resin composition>

The hexagonal boron nitride powder which has been produced by the production method in accordance with an embodiment of the present invention can be contained in a resin composition and used as a heat dissipation filler.

The resin which is used in the resin composition is not particularly limited, and may be, for example, a silicone-based resin or an epoxy-based resin. Examples of the epoxy resin include a bisphenol A type epoxy resin, a bisphenol S type epoxy resin, a bisphenol F type epoxy resin, a bisphenol A type hydrogenated epoxy resin, a polypropylene glycol type epoxy resin, a polytetramethylene glycol type epoxy resin, a naphthalene type epoxy resin, a phenylmethane type epoxy resin, a tetraexphenol methane type epoxy resin, a biphenyl type epoxy resin, an epoxy resin which has a triazine nucleus in a skeleton, and a bisphenol A alkylene oxide adduct type epoxy resin. Among the above epoxy resins, one type of epoxy resin may be used alone or alternatively a mixture of two or more types of epoxy resins may be used. It is also possible to use, as a curing agent, an amine-based resin, an acid anhydride-based resin, a phenol-based resin, an imidazole, and/or the like. One of these curing agents may also be used alone or a mixture of two or more of the curing agents may be used. The amount of the curing agent contained with respect to the epoxy resin in equivalent ratio is an equivalent ratio of 0.5 to 1.5, and preferably an equivalent ratio of 0.7 to 1.3. In the present specification, these curing agents are also included in the resin.

Further, it is possible to use, as the silicone-based resin, a well-known curable silicone resin without limitation, the well-known curable silicone resin being a mixture of an addition reaction type silicone resin and a silicone-based crosslinking agent. Examples of the addition reaction type silicone resin include polyorganosiloxanes such as polydimethylsiloxane which has, as a functional group, an alkenyl group such as a vinyl group or a hexenyl group in a molecule. Examples of the silicone-based crosslinking agent include a dimethylsiloxane-methylhydrogensiloxane copolymer which is end-capped with a dimethylhydrogensiloxy group, a dimethylsiloxane-methylhydrogensiloxane copolymer which is end-capped with a trimethylsiloxy group, and a polyorganosiloxane which has a silicon atom-bonded hydrogen atom, such as poly(methylhydrogensiloxane) or poly(hydrogensilsesquioxane) which is end-capped with a trimethylsiloxane group. Further, it is possible to use, as a curing catalyst, any well-known platinum-based catalyst or the like without limitation, the known platinum-based catalyst or the like being used for curing a silicone resin. Examples of the curing catalyst include catalysts made of fine particulate platinum, fine particulate platinum which is supported on carbon powder, chloroplatinic acid, alcohol-modified chloroplatinic acid, an olefin complex of chloroplatinic acid, palladium, and rhodium.

The resin and the hexagonal boron nitride powder are contained, in the resin composition, at a ratio which may be determined as appropriated depending on an application. The above-described hexagonal boron nitride powder may be contained, in the entirety of the resin composition, in a range of, for example, 30% to 90% by volume, more preferably 40% to 80% by volume, and even more preferably from 50% to 70% by volume.

The resin composition may contain a component other than hexagonal boron nitride and resin. For example, in the resin composition, part of the hexagonal boron nitride powder may be replaced with an inorganic filler. Examples of the inorganic filler include aluminum oxide, silicon oxide, zinc oxide, magnesium oxide, titanium oxide, silicon nitride, aluminum nitride, aluminum hydroxide, magnesium hydroxide, silicon carbide, calcium carbonate, barium sulfate, and talc. Further, the resin composition may contain as appropriate a curing accelerator, an anti-discoloration agent, a surfactant, a dispersing agent, a coupling agent, a colorant, a plasticizer, a viscosity modifier, an antibacterial agent, and the like.

Examples of the application of the resin composition include an adhesive film, a sheet-like laminated material (resin sheet) such as a prepreg, a circuit board (laminated board application or multilayer printed wiring board application), a solder resist, an underfill material, a thermal adhesive, a die bonding material, a semiconductor sealing material, a hole filling resin, a resin in which a component is embedded, a thermal interface material (sheet, gel, grease, etc.), a power module substrate, a heat dissipation member for an electronic component, and the like.

In a particularly preferred embodiment, the hexagonal boron nitride powder which is produced by the production method in accordance with an embodiment of the present invention is contained in a resin sheet. The resin sheet is formed from the resin composition described above. The resin sheet is a configuration in which hexagonal boron nitride tends to be aligned when the resin composition is formed into a sheet form, and in which particularly the thermal conductivity anisotropy tends to be a problem. The hexagonal boron nitride powder which is produced by the production method in accordance with an embodiment of the present invention is thick and is capable of improving the thermal conductivity anisotropy. Accordingly, it is significantly advantageous to contain the hexagonal boron nitride powder in the resin sheet. The thickness of the resin sheet can be set as appropriate depending on the application, and may be, for example, 10 µm to 200 µm, 10 µm to 100 µm, and 10 µm to 50 µm.

Aspects of the present invention can also be expressed as follows:
An aspect of the present invention is a method for producing a hexagonal boron nitride powder, the method including the steps of: preparing a mixed powder which contains an organic compound that contains nitrogen atoms, a boron source which contains boron atoms whose molar ratio with respect to the nitrogen atoms is adjusted to be 0.26 or more and 0.67 or less, and an alkali metal in which lithium atoms are adjusted to be in a range of 30 mol% or more and less than 100 mol%, the alkali metal being present such that a molar ratio of the boron atoms with respect to atoms of the alkali metal is 0.75 or more and 3.35 or less; and heating the mixed powder at a maximum temperature of 1200°C or higher and 1500°C or lower.

Preferably, the alkali metal includes lithium, and sodium or potassium. In an embodiment of the present invention, the maximum temperature is 1200°C or higher and 1350°C or lower.

### Examples

The following description will more specifically describe embodiments of the present invention with reference to Examples. However, the present invention is not limited by the Examples. The following describes each test method.

### <Measurement of particle diameter and aspect ratio of hexagonal boron nitride powder>

The particle diameter and the aspect ratio of a hexagonal boron nitride powder was measured with use of FE-SEM (S5500, manufactured by Hitachi High Technologies Corporation). First, 100 different hexagonal boron nitride particles were randomly selected from a scanning electron microscopy image at a magnification ratio of 5000 times, and the length of the major axis and the thickness of each of the hexagonal boron nitride particles were measured. Next, respective aspect ratios (length of major axis/length of thickness) of the hexagonal boron nitride particles were calculated. Then, an average value of the aspect ratios was defined as the aspect ratio. Further, the particle diameter was obtained by calculating an average value of measurement values of respective major axes.

### <Measurement of specific surface area of hexagonal boron nitride powder>

The specific surface area of the hexagonal boron nitride powder was measured with use of a BET-specific surface area meter (Macsorb HM model-1201, manufactured by MOUNTECH Co., Ltd.).

### <Example 1>

A mixed powder was prepared by mixing 0.20 mol of boron oxide as a boron source, 0.20 mol of melamine as an organic compound which contains nitrogen, 0.06 mol of lithium carbonate as a lithium salt, and 0.06 mol of sodium carbonate as a salt of an alkali metal other than lithium. In the mixed powder thus prepared, B/N was 0.33, B/AM was 1.67, and the ratio of lithium in the alkali metal was 50 mol%.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

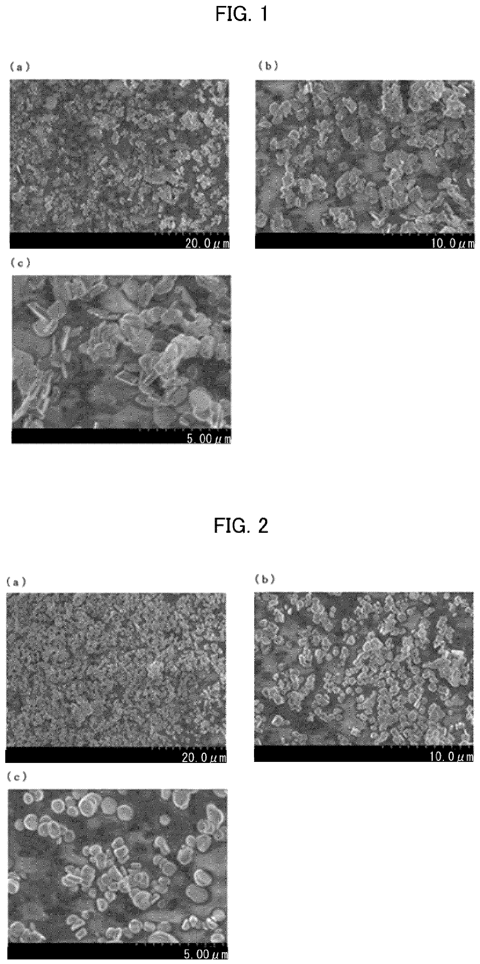

The particle diameter, aspect ratio, and specific surface area of the hexagonal boron nitride powder thus obtained were measured. Table 1 shows production conditions and evaluation results. Fig. 1 shows, as scanning electron microscopic images, images which were captured at a magnification of (a) 2000 times, (b) 5000 times, and (c) 10000 times.

### <Example 2>

A mixed powder was prepared by mixing 0.20 mol of borax as a boron source and also as a salt of an alkali metal other than lithium, 0.40 mol of melamine as an organic compound which contains nitrogen, and 0.26 mol of lithium carbonate as a lithium salt. In the mixed powder thus prepared, B/N was 0.33, B/AM was 0.87, and the ratio of lithium in the alkali metal was 58 mol%.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results. Fig. 2 shows, as scanning electron microscopic images, images which were captured at a magnification of (a) 2000 times, (b) 5000 times, and (c) 10000 times.

### <Example 3>

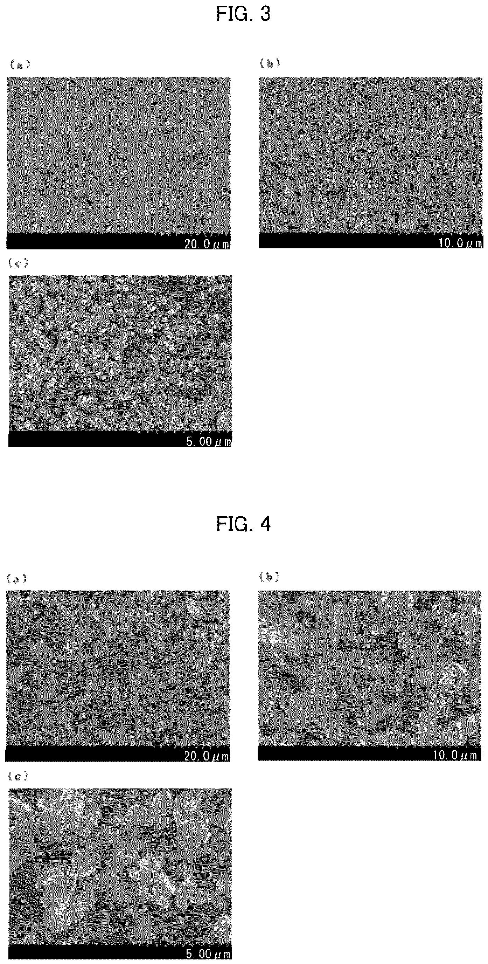

A hexagonal boron nitride powder was prepared as in Example 2 except that the maximum temperature in the step of heating was set to 1300°C. Then, the particle diameter, aspect ratio, and specific surface area of the hexagonal boron nitride powder were measured. Table 1 shows production conditions and evaluation results. Fig. 3 shows, as scanning electron microscopic images, images which were captured at a magnification of (a) 2000 times, (b) 5000 times, and (c) 10000 times.

### <Example 4>

A mixed powder was prepared by mixing 0.20 mol of boron oxide as a boron source, 0.06 mol of borax as a boron source and also as a salt of an alkali metal other than lithium, 0.20 mol of melamine as an organic compound which contains nitrogen, and 0.06 mol of lithium carbonate as a lithium salt. In the mixed powder thus prepared, B/N was 0.53, B/AM was 2.67, and the ratio of lithium in the alkali metal was 50 mol%.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results.

### <Example 5>

A hexagonal boron nitride powder was prepared as in Example 1 except that potassium carbonate was used as a salt of an alkali metal other than lithium. Then, the particle diameter, aspect ratio, and specific surface area of the hexagonal boron nitride powder were measured. Table 1 shows production conditions and evaluation results.

### <Example 6>

A hexagonal boron nitride powder was prepared as in Example 1 except that 0.40 mol of boric acid was used as a boron source. Then, the particle diameter, aspect ratio, and specific surface area of the hexagonal boron nitride powder were measured. Table 1 shows production conditions and evaluation results.

### <Reference Example 1>

A mixed powder was prepared by mixing 0.20 mol of boron oxide as a boron source, 0.20 mol of melamine as an organic compound which contains nitrogen, and 0.12 mol of lithium carbonate as a lithium salt. In the mixed powder thus prepared, B/N was 0.33, B/AM was 1.67, and the ratio of lithium in the alkali metal was 100 mol%. Reference Example 1 is an example in which B/AM is equal to that in Examples 1 and 5 and in which no alkali metal other than lithium is contained.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results. Fig. 4 shows, as scanning electron microscopic images, images which were captured at a magnification of (a) 2000 times, (b) 5000 times, and (c) 10000 times.

### <Reference Example 2>

A mixed powder was prepared by mixing 0.20 mol of boron oxide as a boron source, 0.20 mol of melamine as an organic compound which contains nitrogen, and 0.23 mol of lithium carbonate as a lithium salt. In the mixed powder thus prepared, B/N was 0.33, B/AM was 0.87, and the ratio of lithium in the alkali metal was 100 mol%. Reference Example 2 is an example in which B/AM is equal to that in Example 2 and in which no alkali metal other than lithium is contained.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results.

### <Reference Example 3>

A hexagonal boron nitride powder was prepared as in Reference Example 2 except that the maximum temperature in the step of heating was set to 1300°C. Then, the particle diameter, aspect ratio, and specific surface area of the hexagonal boron nitride powder were measured. Reference Example 3 is an example in which B/AM is equal to that in Example 3 and in which no alkali metal other than lithium is contained. Table 1 shows production conditions and evaluation results.

### <Reference Example 4>

A mixed powder was prepared by mixing 0.19 mol of boron oxide as a boron source, 0.12 mol of melamine as an organic compound which contains nitrogen, and 0.07 mol of lithium carbonate as a lithium salt. In the mixed powder thus prepared, B/N was 0.53, B/AM was 2.71, and the ratio of lithium in the alkali metal was 100 mol%. Reference Example 4 is an example in which B/AM is substantially equal to that in Example 4 and in which no alkali metal other than lithium is contained.

A hexagonal boron nitride powder was prepared by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results.

### <Reference Example 5>

A hexagonal boron nitride powder was prepared as in Reference Example 1 except that 0.40 mol of boric acid was used as a boron source. Then, the particle diameter, aspect ratio, and specific surface area of the hexagonal boron nitride powder were measured. Reference Example 5 is an example in which B/AM is equal to that in Example 6 and in which no alkali metal other than lithium is contained. Table 1 shows production conditions and evaluation results.

### <Reference Example 6>

A mixed powder was prepared by mixing 0.20 mol of boron oxide as a boron source, 0.20 mol of melamine as an organic compound which contains nitrogen, and 0.06 mol of lithium carbonate as a lithium salt. In the mixed powder thus prepared, B/N was 0.33, B/AM was 3.33, and the ratio of lithium in the alkali metal was 100 mol%. Reference Example 6 is an example in which an amount of lithium with respect to boron is equal to that in Examples 1 and 5 and in which no alkali metal other than lithium is contained. Reference Example 6 corresponds to a production method in which the amount of lithium used is simply reduced from that in Reference Example 1.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

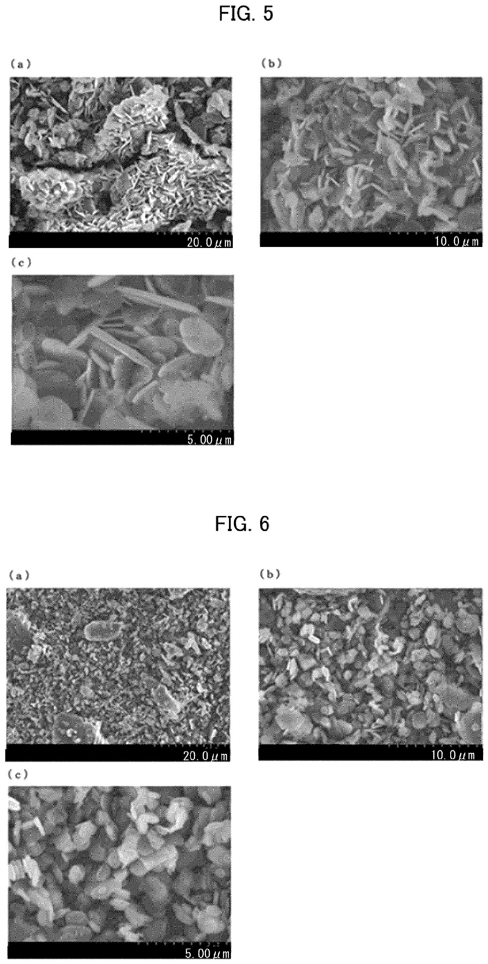

The particle diameter, aspect ratio, and specific surface area of the hexagonal boron nitride powder thus obtained were measured. Table 1 shows production conditions and evaluation results. Fig. 5 shows, as scanning electron microscopic images, images which were captured at a magnification of (a) 2000 times, (b) 5000 times, and (c) 10000 times.

### <Reference Example 7>

A mixed powder was prepared by mixing 0.20 mol of boron oxide as a boron source, 0.20 mol of melamine as an organic compound which contains nitrogen, and 0.12 mol of sodium carbonate as a salt of an alkali metal other than lithium. In the mixed powder thus prepared, B/N was 0.33, and B/AM was 1.67. Reference Example 7 is an example in which B/AM is substantially equal to that in Examples 1 and 5 and in which no lithium is contained.

A hexagonal boron nitride powder was produced by heating, in the step of heating, the mixed powder prepared above, the heating in the heating step being carried out at a maximum temperature of 1400°C for 1 hour in a nitrogen atmosphere with use of a batch-type firing furnace. The hexagonal boron nitride powder thus prepared was acid-washed with 5% aqueous hydrochloric acid solution, and then filtrated, washed with water, and dried.

The particle diameter, aspect ratio, and specific surface area of the hexagonal boron nitride powder thus obtained were measured. Table 1 shows production conditions and evaluation results. Fig. 6 shows, as scanning electron microscopic images, images which were captured at a magnification of (a) 2000 times, (b) 5000 times, and (c) 10000 times.

**[Table 1]**

| | Production conditions of hexagonal boron nitride powder | | | | Physical properties of hexagonal boron nitride powder | | |
|---|---|---|---|---|---|---|---|
| | Mixed powder | | | Heating step | Particle diameter [µm] | Aspect ratio | Specific surface area [m²/g] |
| | B/N | B/AM | Lithium ratio in alkali metal | Maximum temperature | | | |
| Example 1 | 0.33 | 1.67 | 50 mol% | 1400°C | 1.2 | 4.3 | 4.6 |
| Example 2 | 0.33 | 0.87 | 58 mol% | 1400°C | 0.9 | 2.0 | 3.4 |
| Example 3 | 0.33 | 0.87 | 58 mol% | 1300°C | 0.4 | 1.1 | 6.9 |
| Example 4 | 0.53 | 2.67 | 50 mol% | 1400°C | 0.9 | 3.1 | 4.2 |
| Example 5 | 0.33 | 1.67 | 50 mol% | 1400°C | 1.2 | 4.5 | 4.8 |
| Example 6 | 0.33 | 1.67 | 50 mol% | 1400°C | 1.1 | 4.4 | 4.3 |
| Reference Example 1 | 0.33 | 1.67 | 100 mol% | 1400°C | 1.2 | 4.1 | 4.2 |
| Reference Example 2 | 0.33 | 0.87 | 100 mol% | 1400°C | 1.1 | 3.5 | 3.7 |
| Reference Example 3 | 0.33 | 0.87 | 100 mol% | 1300°C | 0.6 | 1.4 | 7.4 |
| Reference Example 4 | 0.53 | 2.71 | 100 mol% | 1400°C | 1.2 | 4.5 | 4.0 |
| Reference Example 5 | 0.33 | 1.67 | 100 mol% | 1400°C | 1.1 | 4.3 | 4.4 |
| Reference Example 6 | 0.33 | 3.33 | 100 mol% | 1400°C | 1.8 | 7.3 | 2.8 |
| Reference Example 7 | 0.33 | 1.67 | 0 mol% | 1400°C | 1.3 | 5.5 | 4.7 |

In each of Examples 1 to 6, a thick hexagonal boron nitride powder which had an aspect ratio in a range of 1.0 to 5.0 could be obtained. In a comparison between (a) Examples 1 and 5 each using a mixed powder in which lithium atoms in the alkali metal was adjusted to be in the range of 30 mol% or more and less than 100 mol% and (b) Reference Example 1 which had the same B/AM as Examples 1 and 5 and in which the ratio of lithium in the alkali metal was 100%, the hexagonal boron nitride powders obtained in Examples 1 and 5 each had an aspect ratio equivalent to that in Reference Example 1 while the amount of the lithium salt used in Examples 1 and 5 was smaller than that in Reference Example 1. The same applies to respective comparisons between Example 2 and Reference Example 2, between Example 3 and Reference Example 3, between Example 4 and Reference Example 4, and between Example 6 and Reference Example 5. On the other hand, it was not possible to obtain a thick hexagonal boron nitride powder in (i) Reference Example 6 in which the amount of lithium with respect to boron atoms in the mixed powder was the same as that in Examples 1 and 5 while no alkali metal other than lithium was present and (ii) Reference Example 7 in which only the alkali metal other than lithium was used without use of lithium. The above has shown that even in a case where the amount of lithium is smaller, a thick hexagonal boron nitride powder can be produced under the following conditions as in cases where the amount of lithium is large: the mixed powder as a raw material contains a boron source, an organic compound which contains nitrogen, atoms of an alkali metal; and the alkali metal is arranged to include lithium in the range of 30 mol% or more and less than 100 mol%.

Further, in a comparison between Examples 2 and 3 which employ respective maximum temperatures different from each other during heating, the hexagonal boron nitride powder obtained in Example 3, in which the maximum temperature in the step of heating was in the range of 1200°C to 1350°C, had a smaller particle diameter than that obtained in Example 2, in which the maximum temperature was over 1350°C in the step of heating. That is, in Example 3, it was possible to obtain a hexagonal boron nitride powder which had a small particle diameter.

## Claims

1. A method for producing a hexagonal boron nitride powder, the method comprising the steps of:
- preparing a mixed powder which contains an organic compound that contains nitrogen atoms, a boron source which contains boron atoms whose molar ratio with respect to the nitrogen atoms is adjusted to be 0.26 or more and 0.67 or less, and an alkali metal in which lithium atoms are adjusted to be in a range of 30 mol% or more and less than 100 mol%, the alkali metal being present such that a molar ratio of the boron atoms with respect to alkali metal atoms contained in the alkali metal is 0.75 or more and 3.35 or less; and
- heating the mixed powder at a maximum temperature of 1200°C or higher and 1500°C or lower.

2. The method as set forth in claim 1, wherein the alkali metal includes lithium, and sodium or potassium.

3. The method as set forth in claim 1, wherein the maximum temperature is 1200°C or higher and 1350°C or lower.
